Europäisches Patentamt

**European Patent Office**

Office européen des brevets

(11) Publication number: **0 079 152**

**A1**

(12) **EUROPEAN PATENT APPLICATION**

(21) Application number: **82305610.6**

(22) Date of filing: **21.10.82**

(51) Int. Cl.³: **B 65 G 45/02**
**F 16 N 15/00, F 16 H 57/05**

(30) Priority: **05.11.81 US 318610**

(43) Date of publication of application:
**18.05.83 Bulletin 83/20**

(84) Designated Contracting States:
**DE FR GB IT NL**

(71) Applicant: **CHEMED CORPORATION**
**1200 DuBois Tower**
**Cincinnati Ohio 45202(US)**

(72) Inventor: **Coffrey, Charles R.**
**2816 Inverness Place**
**Cincinnati Ohio 45209(US)**

(72) Inventor: **Coleman, Kenneth C.**
**1809 Arrowhead Trail**
**Loveland Ohio 45140(US)**

(74) Representative: **Allen, Oliver John Richard  et al,**
**Lloyd Wise, Tregear & Co. Norman House 105-109**
**Strand**
**London, WC2R 0AE(GB)**

(54) **Improved lubrication of conveyor chains.**

(57) Conveyor chains, such as those used in a bottling plant, are lubricated by means of a lubricant concentrate applicator followed by a separate water applicator. The flow of lubricant and water is independently controlled, thereby eliminating wasteful over lubrication and precluding under lubrication at a given point on the conveyor chain. Also absence of hard water in the lubricant applicator prevents formation of calcium and magnesium soaps that tend to clog the nozzle.

This invention relates generally to a lubrication system for a conveyor chain or conveyor belt of the type used in bottling plants. More specifically, the invention involves the separate application of lubricant and water to a conveyor belt or chain. The separation of lubricant and water has several advantages. This permits application of lubricant to points along the belt that require lubrication at a given time. Furthermore foam is reduced. Also in cases where only hard water is available, plugging of the lubrication nozzle is prevented, because calcium and magnesium soaps are not formed in the lubrication container.

As is well known, a common system for conveying bottles in a bottling plant is a continuous moving conveyor belt or chain. These chains may be typically twenty feet long and generally include mechanisms for moving the bottles onto the chain plates at one end and for removing the bottles at the other end. In order to reduce friction, both in the moving parts of the chain and also to facilitate movement of bottles onto and off from the surfaces of the chain it is necessary to keep the entire chain system continuously lubricated. On the other hand over lubrication is to be avoided, since this may generate quantities of foam that are impossible to deal with. The instant invention facilitates addition of the correct amount of lubricant to a given chain by adding the lubricant and the water to the chain from separate nozzles. In this way nozzles can be spaced along the conveyor belt for addition of lubricant and/or water at given points. At some points lubricant will be needed, but no water. At other points both lubricant and water will be needed. At still other points only water will be needed. And there will be some areas where neither additive will be required at a given time.

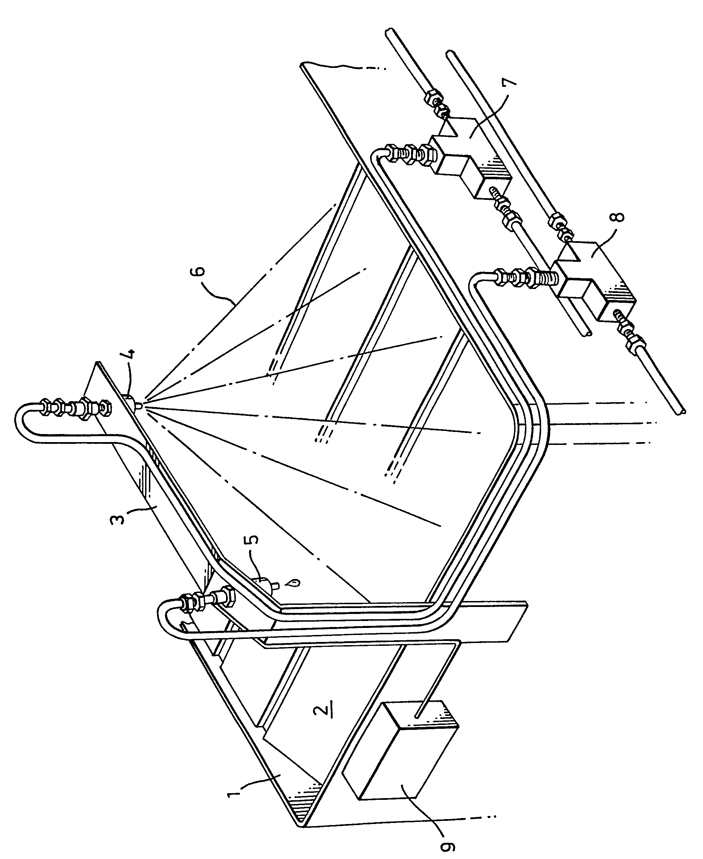

The drawing shows an embodiment of the invention, indicating apparatus for adding lubricant and water to a portion of a chain system. In this perspective view, at 1 is shown the tray container for the conveyor chain or belt 2. At 3 is shown a support arm carrying nozzle 4, which is the water spray, and nozzle 5, which is the lubricant spray. The spray pattern 6, for the water spray, indicates the area of the conveyor system covered by the water spray. The lubricant nozzle 5 simply drips the lubricant concentrate. Headers 7 and 8 respectively provide sources for the water and the lubricant. 9 is an electrical power and control box for the accurate control of the lubricant solenoid valve. The sprays reach both the plate surfaces and their supporting sprockets (not shown).

Generally there are two methods of lubricating beverage plant chains. First, and most common, is to dilute a liquid concentrate with water by means of a dilution tank or by a proportioner pump which injects the concentrated lubricant into a water line. The diluted lubricant is then dispensed either by a drip dispenser or by a spray nozzle. Sequestrants or softened water must be used to prevent formation of insoluble hard water soaps which will plug lines, nozzles and spray heads. The second method is to place a solid bar of soap onto the leading end of the conveyor. Water is dripped onto the bars to dissolve the soap and lubricate the conveyor.

However, on any conveyor chain the use of one fixed concentration as in prior practice inevitably leads to lubrication problems due to under use at some points along the conveyor line (inadequate lubrication) and over use at other points (waste of product).

This invention applies the concentrated liquid lubricant in drops or sprays directly onto the conveyor. Dilution water is sprayed onto the conveyor after the lubricant. Amount of lubricant usage can be reduced by controlling application at each lubrication point to the required concentration for proper lubrication and foam level at that point. By not premixing the lubricant and water, sequestrants or other forms of water treatment for the control of hard water cations are not necessary. Through the separate water line cleaners and sanitizers can be applied to the conveyor as necessary.

## Test Conditions

Evaluations were performed on a 7-inch by 12 foot stainless steel conveyor chain supported by cast iron carriers. A digital electronic measurement device was mounted at the end of the conveyor to measure the amount of force, registered in pounds, exerted by 29 glass bottles filled with water for a combined weight of 41 pounds. To simulate heavier conveyor loading a second group of 33 bottles provided an additional load of 46.6 pounds to the conveyor. This second group was separated from the initial group of bottles and did not apply force directly to the electronic equipment. A strip chart recorder was used to record the information from the electronic equipment.

The digital equipment measures the force exerted by the moving conveyor on the bottles, which in this test were held stationary the better to test the lubrication. As lubrication is improved the force between the conveyor and the bottles is reduced. Hence, the lower the value from the digital equipment the better the lubricity. Due to the sensitivity of the equipment the smooth movement of the conveyor chain can be evaluated. A range of force values are produced which is called the span. The width of the span is directly proportional to the smoothness of motion of the conveyor chain.

Three liquid concentrated lubricants, which represents typical types of conveyor lubricants commonly found in the market, were chosen to evaluate the separate dispensing of concentrated lubricant and dilution water. To establish a method of comparison between the two types of dispensing methods the three liquid concentrates were first evaluated using conventional spray nozzle dispenser applying a prediluted solution (control).

For adequate coverage of the conveyor, twin spray nozzles were used to apply a 1:100 dilution of concentrated lubricant and deionized water at a flow rate of 97 ml/min. Results of this test are listed on Table 1. Deionized water had to be used in this evaluation to prevent the formation of insoluble calcium soaps which would plug the spray nozzles.

Each concentrate was then evaluated using the drip dispenser (this invention). The liquid concentrated lubricant was dripped directly onto the conveyor at a single point. The twin spray nozzles were used to apply the dilution water. Tap water was used in this evalution with an average hardness of 8 grains to demonstrate that water treatment is not necessary for the operation of the system. After a drip rate for the lubricant concentrate was established a percentage timer was used to vary the flow rate. A second timer and solenoid controlled the flow rate of the dilution water.

A description and results for each of the lubricants tested is given below.

In the following examples, a control run was first made, using an aqueous solution of a given lubricant by spraying same at 97 ml/minute through the nozzle dispenser. Next, a comparative run was made using the same test set-up except that lubricant and water were applied through separate nozzles (this invention) and at several different flow rates. The lubricant was "dripped" and the following water application was sprayed.

### Example 1 (Control)

Lubricant A is a liquid concentrated lubricant composed of 28% potassium and 4% amine soaps of vegetable fatty acids, 7.6% trisodium salt of ethylene diamine tetracetic acid, 2% nonionic surfactant, 3% glycol with the balance water. The fatty acids consisted of 4.7% caprylic, 3.3% capric, 1.4% palmitic, 1.40% stearic, 46.5% oleic, and 42.7% linoleic. The nonionic surfactant used was nonylphenoxypoly(ethyleneoxy) ethanol. When dispensed through the spray nozzle dispenser an average force reading of 5.0 pounds with a span of 1.5 pounds was recorded. A large excess of foam was produced which climbed the bottles and covered the floor. See Table 1.

### Example 2 (This Invention)

The drip dispenser (which initially produced large excesses of foam) allowed the lubricant flow rate to be reduced 0.40 ml/min. The lowest force readings were obtained at a lubricant flow rate of 0.40 ml/min, water flow rate of 44.6 ml/min for a force of 3.4 pounds and a span of 1.25 pounds. Foam level was also reduced to a very low level where it did not climb the bottles or fall on the floor.

This represents an improvement in lubricity by 32%, an improvement in the span by 16.7 and a reduction in lubricant usage by 58.8% over the spray nozzle dispenser. Table 2 contains the results of the various lubricant and water flow rates.

### Example 3 (Control)

Lubricant B is a liquid lubricant concentrate composed of 19.0% potassium soaps of mixed vegetable fatty acids, 1.8% trisodium salt of ethylene diamine tetracetic acid, 4.0% of the aforesaid nonionic surfactant with the balance water. The fatty acids consisted of 3.6% caprylic, 19.2% lauric, 8.0% myristic, 4.9% palmitic, 1.7% stearic, 34.3% oleic, and 28.3% linoleic. Using the spray nozzle dispenser an average force value of 4.63 pounds with a span of 1.25 pounds was produced. As with the previous lubricant excessive foam was a problem. A heavy thick foam was produced which climbed the bottles and accumulated on the floor. See Table 1.

### Example 4 (This Invention)

The drip dispenser reduced the force value to 3.63 pounds with a span of 1.25 pounds. This was obtained at a lubricant flow rate of 0.63 ml/min and a water flow of 37.6 ml/min. The foam was a very low wet film that did not climb the bottles or fall on the floor yet provided the detergency necessary to keep the conveyor clean. In this example the drip dispenser improved lubricity by 21.6%, the span remained the same and lubricant usage was cut by 35%. Further information is given on Table 3.

### Example 5 (Control)

Lubricant C, a liquid concentrate composed of 29.5% potassium soaps of mixed vegetable fatty acids, 0.15% sodium gluconate with the balance water. The fatty acids consisted of 1.4% caprylic, 3.4% lauric, 1.50% myristic, 4.5% palmitic, 1.7% stearic, 43.2% oleic, and 44.7% linoleic. The spray nozzle system produced force values of 4.4 pounds with a span of 1.25 pounds. As with the other lubricants when dispensed with the spray nozzles excessive amounts of foam are produced which climb the bottles and interfere with the bottling operation. See Table 1.

#### Example 6 (This Invention)

With the drip dispenser the force value dropped to 2.4 pounds with a span of 1.25 pounds. Foaming was reduced to a thin wet dispersed foam. This was achieved at a lubricant flow of 0.78 ml/min and a water flow of 44.6 ml/min. The drip dispenser improved lubricity by 45.5% while reducing lubricant usage by 19.6%. Table 4 presents the results of the various lubricant and water flow rates.

The results of the three test lubricants indicate that the drip dispenser system can (1) improve lubricity by the direct application of concentrated lubricant to the conveyor, (2) reduce lubricant usage per point, (3) be controlled to provide the desired amount of lubrication at each point, (4) control the amount of foaming which can interfere with bottling operations, (5) eliminate the need for water treatment to control hard water cations, (6) can be used with sequestered or non-sequestered system, and (7) can be used with alkali metal soap lubricants, triethanolamine soap lubricants and semi-synthetic lubricants.

By hard water is meant water containing 60-180 mg/liter equivalent $CaCO_3$.

)8

TABLE I

Values obtained by spray nozzle dispenser of a 1-100 dilution of the lubricant concentrates in deionized water.

| | Flow Rate ml/minute | Force Exerted on Load Cell (pounds) | Span (pounds) | Remarks |
|---|---|---|---|---|
| Lubricant A | 97 ml/minute | 5.0 | 1.5 | High foam climbed bottles, covered floor |
| Lubricant B | 97 ml/minute | 4.63 | 1.25 | Excess foam climbed bottles, covered floor. |
| Lubricant C | 97 ml/minute | 4.4 lbs. | 1.25 | Excess foam, thick climbed bottles, covered floor. |

**Table 2**

LUBRICANT FLOW RATE (TIMER SETTINGS)

| Water Flow Rate (Timer Settings) | 1.6 ml/min. (100%) | 0.98 ml/min. (75%) | 0.77 ml/min. (50%) | 0.63 ml/min. (40%) | 0.55 ml/min (30%) | 0.40 ml/min. (20%) |
|---|---|---|---|---|---|---|
| 97 ml/minute (100%) | Load Cell 7.25 lbs. Span 2.5 lbs. Large amounts of thick, heavy foam. | Load Cell 5.85 lbs. Span 2.0 lbs. Large amounts of heavy foam, slightly wetter. | Load Cell 5.25 lbs Span 2.0 lbs. Moderate amounts of wet foam. | Load Cell 4.00 lbs. Span 1.75 lbs. Very wet dispersed foam that remains on chain, very little falls on floor. | Load Cell 3.6 lbs. Span 1.75 lbs. Very low dispersed foam. Best in series. | Load Cell 3.4 lbs. Span 1.75 lbs. Only thin ribbon of foam down center of chain. Insufficient detergency. |
| 50 ml/minute (75%) | Load Cell 7.9 lbs. Span 2.5 lbs. Thick, heavy foam | Load Cell 6.9 lbs. Span 2.5 lbs. Thick, heavy foam | Load Cell 5.4 lbs. Span 1.75 lbs. Wetter foam, but still a lot of foam | Load Cell 5.15 lbs. Span 1.85 lbs. Moderate amount of a wet foam. | Load Cell 4.6 lbs. Span 1.50 lbs. Low foam, very wet, very little falling on floor. | Load Cell 3.5 lbs. Span 1.25 lbs. Very wet dispersed foam. Very little falling on floor. Best in series. |
| 44.6 ml/minute (50%) | Load Cell 6.9 lbs. Span 2.25 lbs. Very heavy dense foam. | Load Cell 7.5 lbs. Span 2.35 lbs. Heavy dense foam | Load Cell 5.9 lbs. Span 2.00 lbs. Wetter foam, but still large amount of foam. | Load Cell 5.00 lbs. Span 1.50 lbs. Less foam, wetter foam. | Load Cell 4.75 lbs. Span 1.50 lbs. Low foam, wet and dispersed on chains. Very little falling on floor. | Load Cell 3.40 lbs. Span 1.25 lbs. Very low foam, none falling on floor. Best of series. |
| 37.6 ml/minute (40%) | | | | Load Cell 4.9 lbs. Span 1.75 lbs. Thick, heavy foam. | Load Cell 5.25 lbs. Span 1.50 lbs. Moderate wet foam. | Load Cell 3.75 lbs. Span 1.75 lbs. Wet well dispersed foam. Does not fall on floor. Best of group. |

Table 3

### LUBRICANT FLOW RATE (TIMER SETTINGS)

Water Flow Rate (Timer Setting)

|  | 1.6 ml/min. (100%) | 0.98 ml/min. (75%) | 0.78 ml/min (50%) | 0.63 ml/min. (40%) | 0.55 ml/min. (30%) |
|---|---|---|---|---|---|
| 97 ml/minute (100%) | Load Cell 4.10 lbs. Span 1.40 lbs. Low-foam, very little falling off chain. | Load Cell 3.5 lbs. Span 1.5 lbs. Very wet low foam, good detergency. Best of series. | Load Cell 3.25 lbs. Span 1.75 lbs. Thin ribbon of foam down center of conveyor only fair detergency. | | |
| 50 ml/minute (75%) | Load Cell 4.1 lbs. Span 1.6 lbs. Moderate foam, falls on floor. | Load Cell 3.75 lbs. Span 1.35 lbs. Moderate foam, falls on floor. | Load Cell 4.0 lbs. Span 1.86 lbs. Lower foam, very little falling onto floor. | Load Cell 3.50 lbs. Span 1.50 lbs. Low foam, a wet, thin layer on chain. Best of series. | Load Cell 3.75 lbs. Span 1.50 lbs. Thin ribbon of foam down center of chain, only fair detergency. |
| 44.7 ml/minute (50%) | Load Cell 4.6 lbs. Span 2.0 lbs. Moderate foam falls on floor. | Load Cell 4.4 lbs. Span 1.50 lbs. Moderate foam, wet foam, falls on floor. | Load Cell 4.1 lbs. Span 1.50 lbs. Low wet foam, very, very little falls on floor. | Load Cell 4.0 lbs. Span 1.25 lbs. Very low wet foam, none falling on floor. | Load Cell 4.0 lbs. Span 1.35 lbs. Thins ribbon of foam down center of chain. |
| 37.6 ml/minute (40%) | Load Cell 4.75 lbs. Span 1.75 lbs. Moderate foam falls on floor. | Load Cell 4.5 lbs. Span 1.60 lbs. Wet, moderate foam. | Load Cell 4.13 lbs. Span 1.50 lbs. Low wet foam. | Load Cell 3.63 lbs. Span 1.25 lbs. Very low wet foam, best of series | |

Table 4

## LUBRICANT C SEPARATE DISPENSING OF LUBRICANT AND TAP WATER

### LUBRICANT FLOW RATE (TIMER SETTING)

|  | 1.6 ml/min. (100%) | 0.98 ml/min. (75%) | 0.78 ml/min. (50%) | 0.63 ml/min. (40%) | 0.55 ml/min. (30%) |
|---|---|---|---|---|---|
| 97 ml/minute (100%) | Load Cell 3.38 lbs. Span 1.50 lbs. Moderate foam. | Load Cell 2.25 lbs. Span 1.50 lbs. Low foam, wet foam. | Load Cell 3.75 Span 1.15 lbs. Very low foam remained on chain. |  |  |
| 50 ml/minute (75%) | Load Cell 4.62 lbs. Span 1.65 lbs. Moderate foam. | Load Cell 3.75 lbs. Span 1.75 lbs. Low wet foam. | Load Cell 3.6 lbs. Span 1.75 lbs. Very low wet foam remains on chain. Best of series. | Load Cell 4.25 lbs. Span 1.65 lbs. No foam, smut build up on chain. span. |  |
| 44.6 ml/minute (50%) | Load Cell 4.1 lbs. Span 1.25 lbs. Moderate foam. | Load Cell 2.9 lbs. Span 1.30 lbs. Low wet foam, good detergency. | Load Cell 2.4 lbs. Span 1.25 lbs. Low wet foam remains on chain. Best of series. | Load Cell 3.75 lbs. Span 1.25 lbs. Almost no foam present, poor detergency. |  |
| 37.6 ml/minute (40%) | Load Cell 4.5 lbs. Span 1.35 lbs. Wet, moderate foam. | Load Cell 2.9 lbs. Span 1.35 lbs. Wet, low foam. | Load Cell 2.6 lbs. Span 1.4 lbs. Wet, low foam. | Load Cell 2.6 lbs. Span 1.5 lbs. Very low wet foam. Best of series. | Load Cell 2.13 lbs. Span 1.50 lbs. Thin ribbon of foam down center of conveyor poor detergency. |

WATER FLOW RATE (TIMER SETTINGS)

)11

WHAT IS CLAIMED IS:

1.  Method of lubricating a moving conveyor chain comprising adding lubricant and water to the chain through separate sources.

2.  Method according to Claim 1 in which the water is hard water.

3.  Method according to Claim 1 in which the lubricant is applied first, then the water.

**European Patent Office**

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| | --- | | B 65 G 45/02 |
| Y | US-A-4 262 776 (WILSON) *Column 3, lines 30-47; column 4, lines 29-34; figure 1* | 1 | F 16 N 15/00 |
| | | | F 16 H 57/05 |
| | --- | | |
| Y | US-A-3 051 264 (BATCHELOR) *Column 3, lines 71-74; column 4, lines 1-5; column 5, lines 20-35; figure 2* | 1,2 | |
| | --- | | |
| Y | GB-A-1 297 917 (STEBBINGS) *Page 2, lines 57-101; figure 2* | 1,3 | |
| | ----- | | |

| TECHNICAL FIELDS SEARCHED (Int. Cl. ³) |
|---|
| B 65 G |
| F 16 N |
| B 08 B |
| F 16 H |

The present search report has been drawn up for all claims

| Place of search THE HAGUE | Date of completion of the search 14-02-1983 | Examiner OSTYN T.J.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82